# EUROPÄISCHE PATENTANMELDUNG

(11) **EP 0 612 788 A1**
(43) Veröffentlichungstag der Anmeldung: **31.08.1994**
(21) Anmeldenummer: 94102057.0
(22) Anmeldetag: 10.02.1994
(51) Int. Cl.: C08J 3/18, C08L 31/02, C08L 33/06

(54) **Verbesserte Plastisole**

(30) Priorität: 20.02.1993 DE 4305355
(71) Anmelder: Röhm GmbH, D-64293 Darmstadt (DE)
(72) Erfinder: Fink, Herbert, Dr., D-64404 Bickenbach (DE); Süfke, Thomas, Dr., D-64380 Rossdorf (DE)

(57) **Zusammenfassung**

Die Erfindung betrifft Plastisole enthaltend als gelierfähige Massen Copolymerisate CP mit einer Glastemperatur oberhalb 35 Grad C, mit einem Polymerisationsgrad von mehr als 400 und einer durchschnittlichen Korngröße von 0,05 bis 500 µm, wobei die Copolymerisate CP aufgebaut sind aus
A) mindestens 30 bis 95 Gew.-% bezogen auf CP an (Meth)acrylsäureestern der Formel I 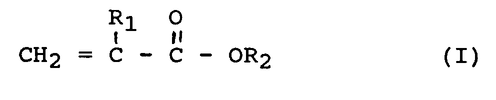 worin
   - R₁: für Wasserstoff oder Methyl und
   - R₂: für einen gegebenenfalls verzweigten Alkylrest oder einen Cycloalkylrest mit 1 bis 7 Kohlenstoffatomen oder für
   Phenyl oder Naphthyl
B) höchstens 70 und bis 5 Gew.-% bezogen auf CP an Fettsäureestern von Vinylalkoholen der Formel II 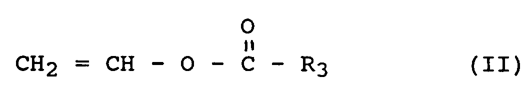 worin
   - R₃: für einen gegebenenfalls verzweigten Alkylrest mit 5 bis 20 Kohlenstoffatomen steht,
   und
C) 0 bis 15 Gew.-% eines oder mehrerer funktionalisierter Monomerer
sowie einem mit den Copolymerisaten CP verträglichen organischen Weichmacher W in Anteilen von 5 bis 400 Gew.-Teilen bezogen auf die Plastisole und noch anorganische Füllstoffe in Mengen von 0 bis 700 Gew.-Teilen bezogen auf die Plastisole.

## Beschreibung

### Gebiet der Erfindung

Die Erfindung betrifft verbesserte Plastisole auf Polyalkyl(meth)acrylat-Basis unter Verwendung von Fettsäurevinylestern als Comonomere.

### Stand der Technik

Plastisole stellen Dispersionen feinteiliger Polymerpartikel in flüssigen, organischen Medien, sogenannten Weichmachern, dar. Die in der Weichmacherphase bei Raumtemperatur feindispers verteilten Polymerpartikel schmelzen bei dem für die Plastisolverarbeitung typischen Gelierprozeß bei Temperaturen von gewöhnlich über 100 Grad C auf und bilden unter Absorption des Weichmachers in dem Polymergerüst eine homogene plastische Matrix. Das bevorzugte Polymermaterial für Plastisole war über Jahrzehnte hinweg das Polyvinylchlorid (PVC) (vgl. Kirk-Othmer, Encyclopedia of Chemical Technology, 3rd. Ed. Vol. 18, pg. 134 - 152 J. Wiley 1982; W. Becker, D. Braun Kunststoff-Handbuch (Neuausgabe) Band 2/2, S. 1077 ff. Hanser 1986). In neuerer Zeit zeichnet sich die Tendenz ab, PVC-Plastisole durch Plastisole auf anderer Polymerbasis, insbesondere durch Polyalkyl(meth)acrylat (= PAMA)-Plastisole zu ersetzen (Kirk-Othmer, loc.cit., S. 161 - 163, US-A 4 210 567; US-A 4 199 486; US-A 4 558 084; US-A 4 071 653). Während unter Umwelt-Gesichtspunkten den PAMA-Plastisolen der Vorzug zu geben ist, haben diese gegenüber den PVC-Plastisolen unter Anwendungsgesichtspunkten wiederum gewisse Nachteile. Zu nennen wäre beispielsweise der höhere Preis, eine eingeschränkte Verträglichkeit gegenüber den gängigen, wohlfeilen Weichmachern und die nicht ganz gleichwertige mechanische Festigkeit der PAMA-Produkte.
Die DE-A 32 29 656 beschreibt ein Verfahren zur Herstellung von Plastisolen für haftklebrige Formteile auf Basis von PVC oder PMMA unter Zusatz von Polyvinylacetat oder Copolymerisaten aus Vinylestern von C₃-C₁₈-Carbonsäuren mit u.a. Ethylen/Propylen, um dadurch eine Verbesserung der Klebeeigenschaften zu erreichen. Copolymerisate aus (Meth)acrylsäureestern mit Fettsäureestern von Vinylalkohol fallen indessen nicht unter die Lehre dieser Druckschrift.

Aus der DE-A 27 22 752 (US-A 4 199 486) sind Plastisole auf Basis von Methylmethacrylat-Mischpolymerisaten in Form von Kern-Schale-Polymerisaten bekannt. Als Comonomere, die in Anteilen von 0 - 20 Gew.-% vorhanden sein können, werden unter anderem Vinylester-aliphatische Carbonsäuren genannt, jedoch ohne nähere Angaben.
Plastisole auf PMMA-Basis mit Haftkleber-Eigenschaften werden in der EP-A 149 135 vorgeschlagen. Bezeichnenderweise werden als vinylische Comonomere dort Vinylacetat und Vinylpropionat bezeichnet, jedoch nicht die Vinylester höherer Carbonsäuren.

Einen speziellen Fall bilden verträgliche Polymermischungen aus zwei spezifischen (Meth)acrylatester-Typen (US-A 4 900 791). Neben anderen Anwendungen wird auch die Anwendung als Plastisole gelehrt. Als Comonomere der Poly(meth)acrylsäureester, die vorwiegend nicht auf MMA aufgebaut sind, werden Vinylacetat, Vinylpropionat und Vinylbutyrat genannt.

### Aufgabe und Lösung

Aus den genannten Gründen beschränkte sich der Einsatz von PAMA-Plastisolen überwiegend auf Spezialanwendungen z.B. die Abdeckung von Schweißnähten im KFZ-Karosseriebereich. Es bestand daher die Aufgabe, Plastisole auf Polyalkyl(meth)acrylatbasis mit verbesserten Eigenschaften zur Verfügung zu stellen. Es ging einerseits darum, die Kosten durch Einsatz billiger Rohstoffe und preisgünstiger Herstellungsverfahren zu senken, andererseits die bisher registrierten Schwachpunkte im mechanischen Verhalten auzugleichen. Es wurde nun gefunden, daß Plastisole auf Basis von Copolymerisaten aus Alkyl(meth)acrylaten und Fettsäuren des Vinylalkohols die Forderungen der Technik weitgehend erfüllen.

Die Erfindung betrifft insbesondere Plastisole PS enthaltend als gelierfähige Massen Copolymerisate CP mit einer Glastemperatur oberhalb 35 Grad C, mit einem Polymerisationsgrad von mehr als 400 und einer durchschnittlichen Korngröße von 0,05 bis 500 µm, wobei die Copolymerisate CP aufgebaut sind aus
A) mindestens 30 bis 95 Gew.-% bezogen auf CP an (Meth)acrylsäureestern der Formel I 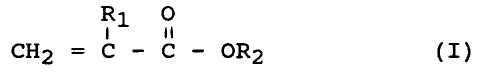 worin
   - R₁: für Wasserstoff oder Methyl und
   - R₂: für einen gegebenenfalls verzweigten Alkylrest oder einen Cycloalkylrest mit 1 bis 7 Kohlenstoffatomen oder für Phenyl oder Naphthyl
B) höchstens 70 und bis 5 Gew.-% bezogen auf CP an Fettsäureestern von Vinylalkoholen der Formel II 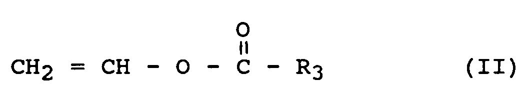 worin
   - R₃: für einen gegebenenfalls verzweigten Alkylrest mit 5 bis 20, insbesondere 7 bis 15 Kohlenstoffatomen steht, und
C) 0 bis 15 Gew.-%, vorzugsweise 0,05 - 10, insbesondere 0,1 - 5 Gew.-% eines oder mehrerer funktionalisierter Monomerer,
wobei sich die Anteile der Komponenten A), B) und C am Copolymerisat CP zu 100 Gew.-% ergänzen, sowie einem mit den Copolymerisaten CP verträglichen, organischen Weichmacher W in Anteilen von 5 bis 400 Gew.-Teilen, bezogen auf die Plastisole PS und noch anorganische, an sich bekannte Füllstoffe in Mengen von 0 bis 700 Gew.-Teile, bezogen auf die Plastisole PS.

Als besonderer Vorteil der erfindungsgemäßen Plastisole PS darf gelten, daß sie chlorfrei sind. Die aus der Anwendung chlorhaltiger Plastisole bekannten Schwierigkeiten treten demnach nicht auf.

### Die Copolymerisate CP

Die Copolymerisate CP enthalten die an sich bekannten Monomeren der Formel I, gegebenenfalls mehrere derselben, in Mengen von > 50, vorzugsweise > 70 Gew.-% und bis zu 95 Gew.-%, bevorzugt die Methacrylsäureester, wobei die Anteile mit den übrigen Bestandteilen so abgestimmt werden, daß die resultierende Glastemperatur Tg oberhalb 35 Grad C liegt. (Zur Glastemperatur vgl. Ullmanns Encyclopedia of Industrial Chemistry, 5th Ed., Vol A21, pg. 474 - 476, VCH 1992; Vieweg-Esser, Kunststoff-Handbuch, Bd. IX, S. 333 - 340, Carl Hanser Verlag, 1975.)

Besonders genannt seien das Methylmethacrylat, das Ethylmethacrylat, das Butylmethacrylat, das 2-Ethylhexylmethacrylat, das Cyclohexylmethacrylat, das Phenylmethacrylat, das Naphthylmethacrylat.
Weiter enthalten die Copolymerisate CP in Mengen von ≦ 70 Gew.-%, vorzugsweise < 30 Gew.-% und bis zu 5 Gew.-% die Vinylester der Formel II.

Es ist das Charakteristikum der erfindungsgemäßen Copolymerisate, daß sie sich nicht, wie der Stand der Technik allenfalls hätte nahelegen können, der als Copolymerisationspartner der (Meth)acrylatester bekannten Vinylmonomere Vinylacetat oder Vinylpropionat bedient, sondern der im allgemeinen von der Herstellung her nicht so reinen bzw. einheitlichen Vinylester höherer, beispielsweise auch verzweigter Carbonsäuren (NEO-Säuren; ®Versatic acids). Genannt seien insbesondere der Neononansäurevinylester (Isononansäurevinylester = C₈H₁₇COOCH=CH₂), der soweit er aus der Oxosynthese stammt, im wesentlichen von der 3,5,5-Trimethylhexansäure gebildet wird (vgl. Ullmanns Encyclopädie der Techn. Chemie, 4. Aufl., Bd. 23, S. 607, Verlag Chemie 1983).

Weiter sind von Interesse der Laurinsäurevinylester (C₁₁H₂₃COOCH=CH₂), sowie der Vinylester der Versaticsäure. (Vgl. Kirk-Othmer, Encyclopedia of Chemical Technology, 3^{rd} Ed., Vol. 4, pg. 863 - 871, J. Wiley, 1978), insbesondere der Typen Versatic acid -911, -10 und -1519. Die ®Versatic acids der Shell Corp., die durch Koch'sche Synthese aus Olefinen mit CO und Wasser hergestellt werden, stellen Gemische mit der C-Zahl 9 bis 11 bzw. 15 bis 19 dar, wobei dem Versaticsäure-10-Vinylester der Struktur 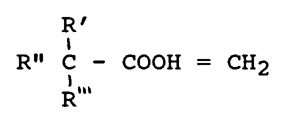
worin R', R'', R''' geradkettige Alkylgruppen darstellen, von denen immer eine eine Methylgruppe ist, eine besondere Bedeutung zukommt.

Als Komponente C) der Copolymerisate CP seien insbesondere Vinyl-Monomere der Formel III

H(R₅)C = C(R₄)COOH III

worin
- R₄: für Wasserstoff oder Methyl oder für eine Gruppe -CH₂COOH und
- R₅: für Wasserstoff oder für eine Gruppe -COOH steht, mit der Maßgabe, daß die Monomeren der Formel III nicht mehr als zwei Carboxylgruppen aufweisen oder die aus III gebildeten (inneren) Anhydride
genannt.

Weiter kommen als Comonomere C) stickstoffhaltige oder hydroxylgruppenhaltige bzw. alkoxylgruppenhaltige, radikalisch polymerisierbare Monomere in Frage. Dazu gehören beispielsweise (Meth)acrylamide der Formel IV 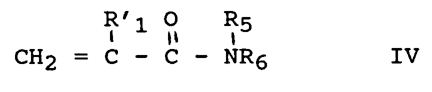
worin
- R'₁: für Wasserstoff oder Methyl und
- R₅: und R₆ unabhängig voneinander für Wasserstoff oder einen gegebenenfalls substituierten, gegebenenfalls cyclischen Alkylrest mit 1 bis 6 Kohlenstoffatomen oder für Phenyl steht, mit der Maßgabe, daß nur einer der beiden Reste für Cycloalkyl- oder Phenyl steht, oder worin R₅ und R₆ zusammen einen vorzugsweise gesättigten Heterocyclus mit 5 oder 6 Ringgliedern bilden, bei dem ein weiteres Ringglied aus Stickstoff oder Sauerstoff bestehen kann,
oder hydroxy- und/oder alkoxygruppenhaltige (Meth)acrylsäureester der Formel V 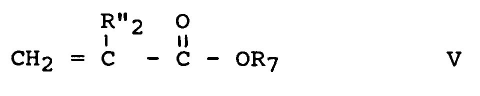
worin
- R''₂: für Wasserstoff oder Methyl und
- R₇: für einen hydroxylgruppenhaltigen oder aminosubstituierten Alkylrest mit 2 bis 6 Kohlenstoffatomen oder einem Rest -(CH₂CH₂O)ₙ)-OR₈, worin R₈ für Wasserstoff oder einen Alkylrest mit 1 bis 4 Kohlenstoffatomen und n für eine ganze Zahl von 1 bis 50 steht,
oder stickstoffhaltige heterocyclische Monomere mit vorzugsweise 5 oder 6-Ringen der Formel VI 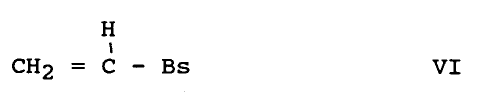
worin
- Bs: für einen 5- oder 6-gliedrigen Heterocyclus steht, der neben Kohlenstoff-Ringgliedern noch ein Sauerstoff- oder Schwefelatom und/oder bis zu zwei Stickstoffatome im Ring besitzt.

Unter den gegebenenfalls noch vorhandenen Substituenten in den Resten R₅ bzw. R₆ seien Hydroxy- oder Alkoxyreste mit bis zu 6 Kohlenstoffatomen verstanden.

Als Vertreter der (Meth)acrylamide der Formel IV seien beispielsweise die folgenden Monomeren genannt: N-Methyl(meth)acrylamid, N-Dimethylaminoethyl(meth)acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropyl](meth)acrylamid, N-[2-Hydroxyethyl](meth)acrylamid.

Als hydroxy- bzw. alkoxysubstituerte Alkylester der (Meth)acrylsäure gemäß Formel V seien angeführt: 2-Hydroxyethyl(meth)acrylat, Hydroxypropyl(meth)acrylat, 2-Methoxyethyl(meth)acrylat, 2-Ethoxyethyl(meth)acrylat, 2-Butoxyethyl(meth)acrylat, 2-(2-Butoxyethoxy)ethylmethacrylat, 2-(Ethoxyethyloxy)ethyl(meth)acrylat, 4-Hydroxybutyl(meth)acrylat, 2-[2-(2-Ethoxyethoxy)ethoxy]ethyl(meth)acrylat, 3-Methoxybutyl-1-(meth)acrylat, 2-Alkoxy-methylethyl(meth)acrylat, 2-Hexoxyethyl(meth)acrylat.

Unter den aminsubstituierten Alkylresten der Gruppe R₇ seien solche verstanden, die der vorstehend gegebenen Definition von -NR₅R₆ entsprechen.
Genannt seien als derartige Monomere der Formel V die folgenden aminsubstituierten Alkylester der (Meth)acrylsäure:
2-Dimethylaminoethyl(meth)acrylat, 2-Diethylaminoethyl(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)acrylat, 2-tert.-butylaminoethyl(meth)acrylat, 3-(Dimethylamino)propyl-(meth)acrylat, 2-(Dimethylaminoethoxyethyl)(meth)acrylat.

Als stickstoffhaltige heterocyclische Monomere der Formel VI seien insbesondere solche aus der Klasse der Vinylimidazole, der Vinyllactame, der Vinylcarbazole und der Vinylpyridine genannt.

Beispiele für diese monomeren Imidazolverbindungen, die keinerlei Beschränkung darstellen sollen, sind N-Vinylimidazol (auch Vinyl-1-imidazol genannt), N-Vinylmethyl-2-imidazol, N-Vinyl-äthyl-2-imidazol, N-Vinylphenyl-2-imidazol, N-Vinyl-dimethyl-2,4-imidazol, N-Vinylbenzimidazol, N-Vinylimidazolin (auch Vinyl-1-imidazolin genannt), N-Vinyl-methyl-2-imidazolin, N-Vinylphenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allyl-caprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol.

Sofern Vertreter der Monomergruppen IV bzw. V bzw. VI als Comonomere C) in den Copolymerisaten CP vorhanden sind, handelt es sich gewöhnlich um Anteile von 0,05 bis 5, vorzugsweise 0,1 bis 3 Gew.-% bezogen auf die Copolymerisate CP insgesamt.

Im allgemeinen liegt das Molgewicht Mw der Copolymerisate CP im Bereich 100 000 bis 500 000, vorzugsweise 150 000 bis 300 000 Dalton. (Bestimmung nach H.F. Mark et al. Encyclopedia of Polymer Science and Engineering, 2nd. Ed. Vol. 10, 1 - 18, J. Wiley 1987).

Die Herstellung der Polymerisate CP kann in an sich bekannter Weise erfolgen, beispielsweise durch Emulsionspolymerisation oder Suspensionspolymerisation (vgl. H. Rauch-Puntigam, Th. Völker, Acryl- und Methacrylverbindungen, Springer Verlag 1968). Bei Anwendung der Emulsionspolymerisation kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside verwendbar. Im allgemeinen wird die verwendete Emulgatormenge - bezogen auf das Polymerisat - 1 Gew.-% nicht überschreiten.
Als Initiator können neben den in der Emulsionspolymerisation üblichen Verbindungen, wie z.B. Per-Verbindungen wie Wasserstoffperoxid, Ammoniumperoxidisulfat (APS) auch Redoxsysteme wie Bisulfit-APS-Eisen-III-salz sowie Azo-Starter verwendet werden. Die Initiatormenge liegt im allgemeinen bei 0,005 bis 0,5 Gew.-% bezogen auf das Polymerisat.

Die Polymerisationstemperatur richtet sich innerhalb gewisser Grenzen nach den Initiatoren. So arbeitet man bei Anwendung von APS vorteilhaft im Bereich von 60 bis 90 Grad C. Bei Einsatz von Redoxsystemen kann auch bei tieferen Temperaturen, beispielsweise bei 30 Grad C polymerisiert werden. Neben der Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %ige Emulsion so erzeugt, daß man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt.
Die Gewinnung der Polymerisate in fester Form kann in an sich bekannter Weise durch Sprühtrocknung, Gefriertrocknung oder durch Ausfällen vorgenommen werden. Unter Umständen kann es vorteilhaft sein, die einzelnen Latexteilchen beim Trocknen miteinander zu größeren Einheiten zu verkleben (partielle Verglasung). Als Richtwert für die agglomerierten Einheiten kann man 5 - 200 µm annehmen.

Die erfindungsgemäß einzusetzenden Polymerisate CP können auch nach dem Verfahren der Perlpolymerisation hergestellt werden. Dabei können die üblichen Dispergiermittel und die gebräuchlichen Kessel (drucklos oder unter Anwendung von Druck) zur Anwendung kommen (vgl. Houben-Weyl, 4. Auflage, Bd. XIV, Seite 406 ff und S. 1053 ff, Georg Thieme Verlag). Aus Gründen des besseren Anquellens werden Perlpolymerisate mit einem Teilchendurchmesser deutlich kleiner als 100 µm bevorzugt.

Weiter können die erfindungsgemaß einzusetzenden Copolymerisate CP auch als Kern-Schale-Polymerisate in Anlehnung an die DE-C 27 22 752 bzw. die US-A 4 199 486 hergestellt werden. Kernpolymerisat und Schalenpolymerisat stehen dabei vorzugsweise im Gewichtsverhältnis 3 : 1 bis 1 : 3.

Grundsäztlich eignen sich die vorstehend angegebenen Monomeren der Formeln I und II, insbesondere Methylmethacrylat, gegebenenfalls auch die Monomeren der Gruppe C, zur Herstellung der Kern-Schale-Polymerisate. Dabei ist die Schale in der Regel überwiegend aus MMA und den Monomeren der Formel II aufgebaut, beispielsweise zu mindestens 80 Gew.-%, vorzugsweise zu mindestens 90 Gew.-% (bezogen auf die Schale) und zu 0 - 15 Gew.-% aus anderen Monomeren der Formel I bzw. III bis V. Das Kernmaterial enthält außer MMA und den Monomeren der Formel II noch andere Monomere der Formel I ebenfalls in Mengen von 0 - 10 Gew.-%, vor allem aber Monomere der Formel I in Anteilen von bis zu 60 Gew.-%, insbesondere 50 ± 10 Gew.-% (bezogen auf das Kernmaterial). Genannt sei beispielsweise das Butyl(meth)acrylat.

Der Aufbau der Copolymerisate CP aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um das Kernmaterial herum gelagert. Durch geeignete Wahl der Emulgiermittelmenge kann die Teilchengröße in dem Sinne beeinflußt werden, daß die Teilchen um so größer werden, je kleiner die Emulgiermittelmenge ist. Die Teilchendurchmesser können z.B. im Bereich von 0,05 bis 5 µm liegen.
In der ersten Polymerisationsstufe, in der das Kernmaterial entsteht, werden 0,01 bis 1 Gew.-%, bezogen auf die Wasserphase an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 60 und 100 Grad C mit Hilfe wasserlöslicher Radikalbildner, wie Kalium- oder Ammoniumpersulfat oder Wasserstoffperoxyd, ausgelöst. Vor Beginn der zweiten Polymerisationsstufe kann erneut Initiator zugesetzt werden, jedoch wird wenig oder gar kein zusätzliches Emulgiermittel in der zweiten Stufe verwendet.
Zur Überführung der erhaltenen, meist 30- bis 60%igen Dispersion in ein trockenes Pulver werden allgemein die Dispersionen in an sich bekannter Weise durch Eintrocknen dünner Schichten in flachen Behältern oder auf Walzen oder vorzugsweise durch Sprühtrocknung getrocknet. Die Sprühtrocknung der Dispersion kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 120 bis 200 Grad C. Für die Eigenschaften des sprühgetrockneten Emulsionspolymerisats ist die Austrittstemperatur der Luft entscheidend, d.h. die Temperatur, bei der die getrockneten Pulverkörnchen am Fuß des Sprühturms oder in einem Zyklonabschneider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 bis 90 Grad C gut geeignet.
Die Austrittstemperatur läßt sich bei konstantem Luftstrom durch Variation der kontinuierlich je Zeiteinheit eingesprühten Dispersionsmenge regeln.

Die durch Sprühtrocknung der Polymerdispersion gewonnenen Copolymerisate CP weisen eine Primärteilchengröße im Gereich 0,1 bis 5 µm auf. (Bestimmung nach Ullmanns Encyclopädie der techn. Chemie, 4. Auflage, Bd. 5, S. 725 - 752). Die Korngrößenverteilung kann durch Messung der Lichtextinktion einer durch die Meßzelle eines Meßgeräts ("Kratel Partoskop F" der Kratel GmbH, Göttingen) strömenden Suspension der Teilchen in Wasser bestimmt werden. Eine sekundär erfolgende Aggregation der Primärteilchen kann zu Agglomeraten im Größenbereich 5 bis 100 µm führen, die aber gleichfalls im Sinne der vorliegenden Erfindung verwendbar sind.

Als besonders geeignete Ausführungsformen der Copolymerisate CP seien genannt:
- Copolymerisat CP-I :: Emulsionspolymerisate aus 78 Gew.-Teilen MMA, 20 Gew.-Teilen Neononansäurevinylester und 2 Gew.-Teilen Methacrylsäure, sprühgetrocknet
Die erfindungsgemäßen Plastisole PS enthalten an sich bekannte Weichmacher W in den dafür üblichen Mengen, beispielsweise für die PAMA-Plastisole (aber auch für PVC-Plastisole) üblichen Weichmacher, insbesondere Phthalsäureester, daneben Adipinsäure- und/oder Sebacinsäureester, chlorierte Paraffine, Trialkylphosphate, aliphatische oder araliphatische Polyester sowie sonstige polymere Weichmacher wie z.B. Harnstoffweichharze. (Vgl. H.K. Felger, Kunststoff-Handbuch Bd. 1/1C, Kanser-Verlag 1985 sowie in H.F. Mark et al. Encyclopedia of Polymer Science and Engineering, Supplemental Volume pg. 568 - 647, J. Wiley 1989). Eine Auswahl geeigneter Weichmacher kann auch der DE-C 25 43 542 entnommen werden. Vorzugsweise kommen Weichmacher bzw. Weichmacherkombinationen infrage, die bei einer Lagerzeit der konfektionierten Plastisole über 3 Wochen bei 30 Grad C einen Viskositätsanstieg unter dem zehnfachen, speziell unter dem fünffachen Wert der Ausgangsviskosität ergeben. Besonders erwähnt seien das Dioctylphthalat, Diisodecylphthalat, Diethylhexylphthalat, Di-C₇-C₁₁-n-alkylphthalat, Trikresylphosphat, Dibenzyltoluol (LIPINOL ®T, Produkt der Fa. Hüls AG) und Benzyloctylphthalat.

Wie bereits vorstehend ausgeführt wurde, kommen die Weichmacher in Anteilen von 5 bis 400 Gew.-Teilen, auf 100 Gew.-Teile des Copolymerisats CP zur Anwendung, in Anpassung an die rheologischen Anforderungen insbesondere beim Auftrag der Plastisole.
Weiter enthalten die Plastisole PS gewöhnlich noch an sich bekannte anorganische Füllstoffe in Mengen bis zu 700 Gew.-Teilen. Genannt seien beispielsweise Calciumcarbonat (Kreide), Titandioxid, Calciumoxid, Perlit, gefällte und gecoatete Kreiden als rheologisch wirksame Additive, ferner gegebenenfalls Thixotropierungsmittel wie z.B. pyrogene Kieselsäure. Die Korngröße liegt meist im Bereich 5 bis 25 µm. Die Plastisole können anwendungsbedingt noch an sich bekannte Hilfsstoffe wie Haftvermittler, Netzmittel, Stabilisatoren, Verlaufsmittel, Treibmittel in Anteilen von 0 bis 5 Gew.-% (bezogen auf die Plastisole) enthalten.
Erwähnt sei z.B. Calciumstearat als Verlaufsmittel.

### Herstellung der Plastisole PS

Prinzipiell kann die Mischung der Komponenten für die erfindungsgemäßen Plastisole mit verschiedenartigen Mischern vorgenommen werden. Im Einklang mit den Erfahrungen bei PVC- und PAMA-Plastisolen werden jedoch langsam laufende Planeten-Rührwerke, Hochgeschwindigkeits-Mischer bzw. Dissolver, Horizontal-Turbomischer und Dreiwalzenwerke bevorzugt; wobei die Wahl von der Viskosität der erzeugten Plastisole beeinflußt wird. (Vgl. H.F. Mark et al., Encyclopedia of Polymer Science and Engineering, 2nd. Ed. Vol. 17, 365 - 866, J. Wiley 1989). Gemischt wird, bis Homogenisierung der Plastisol-Masse eingetreten ist.

Die Plastisol-Masse kann in Schichtsstärken von 1 bis 5 mm bei Temperaturen von 100 bis 200 Grad C innerhalb von 30 bis 2 Minuten geliert werden.

### Anwendung der Plastisole

Bevorzugt werden als Auftragungsmodus für die Beschichtung von Metallteilen derzeit Spritzverfahren, z.B. Pastenspritzverfahren. Dabei wird das Plastisol gewöhnlich mit hohen Drücken (ca. 300 - 400 bar) über airless-Spritzpistolen verarbeitet. Im besonders wichtigen Anwendungsbereich Automobilherstellung/Unterbodenschutz wird gewöhnlich so verfahren, daß nach der Elektrotauchlackierung der Karosserie und erfolgter Trocknung das Plastisol über airless-Spritzpistolen aufgetragen wird. Die thermische Härtung geschieht gewöhnlich in einem Heizofen (Umluft- oder Strahlerofen) bei üblichen Verweilzeiten - abhängig von der Temperatur im Bereich 10 - 35 Minuten und Temperaturen zwischen 120 und 190 Grad C, vorzugsweise 140 bis 180 Grad C. Die kataphorische Beschichtung von metallischen Substraten ist vielfach beschrieben worden (vgl. DE-A 27 51 498, DE-A 27 53 861, DE-A 27 32 736, DE-A 27 33 188; DE-A 28 33 786).

Die erfindungsgemäßen Plastisole eignen sich sehr gut für die gebräuchlichen Anwendungen. Hervorzuheben sind u.a. die Pastenstabilität sowie die mechanischen Eigenschaften (Zugfestigkeit, Reißfestigkeit) der Plastisole bei guten Haftungswerten.

Das nachfolgende Beispiel dient zur Erläuterung der Herstellung der Copolymerisate CP.
Die Glastemperatur Tg der Copolymerisate CP liegt in jedem Falle oberhalb 35 Grad C.

### Beispiel 1

### Herstellung der Copolymerisate CP

In einem mit Rührer, Rückflußkühler und Thermometer ausgerüsteten Polymerisationsgefäß werden 0,9 g C15-Paraffinsulfonat, Na-Salz in 1200 g Wasser unter Rühren auf 85 Grad C erhitzt und mit 0,3 g Ammoniumperoxodisulfat versetzt. Hierzu gibt man für die erste Polymerisationsstufe bei 85 Grad C innerhalb von 2 Stunden eine zuvor hergestellte Emulsion aus 1196 g Wasser, 9,6 g des o.g. Emulgators, 0,6 g Ammoniumperoxodisulfat, 1560 g Methylmethacrylat und 400 g Neononansäurevinylester. Anschließend wird in einer zweiten Stufe eine Emulsion bestehend aus 598 g Wasser, 4,8 g des o.g. Emulgators, 0,3 g Ammoniumperoxodisulfat, 780 g Methylmethacrylat, 200 g Neononansäurevinylester und 60 g Methacrylsäure in 1 Stunde bei 85 Grad C zugegeben. Zur Nachpolymerisation wird der Ansatz mit 0,3 g Ammoniumperoxodisulfat, gelöst in 3 g Wasser, versetzt und 2 Stunden bei 85 Grad C gehalten, anschließend abgekühlt und filtriert.
- Analytische Daten:: Feststoffgehalt = 50 %
pH = 3
η = 540 mPas

## Patentansprüche

1. Plastisole enthaltend als gelierfähige Massen Copolymerisate CP mit einer Glastemperatur oberhalb 35 Grad C, mit einem Polymerisationsgrad von mehr als 400 und einer durchschnittlichen Korngröße von 0,05 bis 500 µm,
dadurch gekennzeichnet,
daß die Copolymerisate CP aufgebaut sind aus
A) mindestens 30 bis 95 Gew.-% bezogen auf CP an (Meth)acrylsäureestern der Formel I 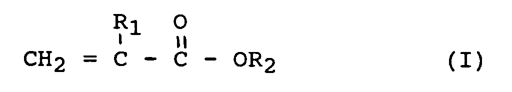 worin
R₁ für Wasserstoff oder Methyl und
R₂ für einen gegebenenfalls verzweigten Alkylrest oder einen Cycloalkylrest mit 1 bis 7 Kohlenstoffatomen oder für Phenyl oder Naphthyl
B) höchstens 70 und bis 5 Gew.-% bezogen auf CP an Fettsäureestern von Vinylalkoholen der Formel II 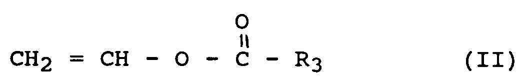 worin
R₃ für einen gegebenenfalls verzweigten Alkylrest mit 5 bis 20 Kohlenstoffatomen steht,
und
C) 0 bis 15 Gew.-% eines oder mehrerer funktionalisierter Monomerer
sowie einem mit den Copolymerisaten CP verträglichen organischen Weichmacher W in Anteilen von 5 bis 400 Gew.-Teilen bezogen auf die Plastisole und noch anorganische Füllstoffe in Mengen von 0 bis 700 Gew.-Teilen bezogen auf die Plastisole.
